# EUROPEAN PATENT SPECIFICATION

(11) **EP 2 799 829 B1**
(45) Date of publication and mention of the grant of the patent: **04.01.2017**
(21) Application number: 13166287.6
(22) Date of filing: 02.05.2013
(51) Int. Cl.: G01L 7/02, G01L 27/00, G01L 27/02

(54) **Method of and calibration device for calibrating an adjustable mechanical pointer gauge**
Verfahren und Kalibrierungsvorrichtung zur Kalibrierung eines verstellbaren mechanischen Zeigermessgeräts
Procédé et dispositif d'étalonnage servant à étalonner une jauge de pointeur mécanique réglable

(43) Date of publication of application: 05.11.2014
(73) Proprietor: Baumer Bourdon-Haenni SA, 41103 Vendome (FR)
(72) Inventor: Vion, Michael, 41260 La Chaussee St Victor (FR); Dr. Zips, Alf, 8280 Kreuzlingen (CH); Fernandez, Nicolas, 41100 Vendôme (FR); Lecomte, David, 28160 Dangeau (FR)
(74) Representative: Strauss, Steffen

(56) References cited:
- DE-A1- 19 837 824
- DE-U1- 29 813 116
- GB-A- 930 510
- GB-A- 1 032 986

## Description

The invention relates to a method of calibrating an adjustable mechanical pointer gauge for measuring a physical quantity, for example a pressure gauge. The invention further relates to a calibration device for calibrating such a gauge.

Mechanical gauges, like pressure gauges, have to be calibrated before they can be used. In a present method of calibration of a pressure gauge, several calibration pressures, for example 0%, 50% and 100% of the maximum pressure are applied. The position of the pointer relative to a scale is assessed by a human operator and the gauge is then corrected. The extent of correction is strongly based on experience of the human operator, the linearity of the mechanical components interacting and the trial / error method applied. Therefore, the calibration is not only time consuming but also hardly reproducible. In addition, the assessment of the human operator is based on a single calibration value only. After calibrating at one value, the operator then goes on to the next calibration value. In this subsequent step, the calibration is based on the assessment at the new calibration value. By calibrating the gauge at the new calibration value the operator can potentially miscalibrate the gauge with respect to the previous calibration value for example due to hysteresis. He therefore has to go back to the previous calibration value again, then back to the new value and so forth, making the calibration process an iterative process. As the pointer and the dial have to be removed in order to adjust the gauge and reattached in order to read the values, this previous method is time and cost consuming.

The object of the present invention is therefore to provide a solution for calibrating an adjustable mechanical pointer gauge for measuring a physical quantity, for example a pressure gauge, that is more time and cost efficient.

This object is achieved by a method that comprises the steps according to claim 1.

The electric sensor can determine the position of the calibration pointer device more precisely and more reliably than a human operator. By measuring at at least two different calibration values, the method is more time efficient than the iterative method in the prior art as the calculation of the extent of correction can be based on more than one calibration value. If necessary, the gauge can be adjusted by a human operator or by a machine in a following step.

The solution according to the invention can be combined as desired and further improved by the further following embodiments that are advantageous on their own, in each case.

The adjustable mechanical pointer gauge can comprise a measuring element that exhibits different amplitudes of deformation for different values of the physical quantity and an adjustable transmission mechanism for transmitting the deformation to the calibration pointer device. In this case, the gauge can be adjusted by adjusting the adjustable transmission mechanism. The adjustable transmission mechanism can for example comprise adjustment screws. The adjustable transmission mechanism can be repeatedly adjustable. It can in particular be adjustable in and against a particular adjustment direction.

The method can further comprise the calculation of at least one correction value by which the gauge should be corrected. The calculation can be based on the determined positions. It can be based on a combination of the positions and in particular on the entire set of positions and not only on a single position as in the previous method. One or more correction values can be calculated. If for example the dial is linear, two correction values can be calculated. One of the correction values can correspond to an offset at one point and the other one can correspond to an offset at another point or to a slope. This calculation can be done by a processor, an analyzer or a computer and can in particular be automated. For example, the positions of the calibration pointer device can be read-in automatically, the at least one correction value can then be calculated and can be made available for example on a screen or in form of computer readable signals that can be used to control a machine.

The electrical sensor can be based on different measurement methods. For example, the electrical sensor can comprise a sensor element, wherein the sensor element has a linear field of measurement. It can be a line sensor. Such a sensor allows a precise measurement of the position. The electrical sensor can be based on an optical method. As an alternative, other methods could be used like capacitive measurements, interferometric measurements or the like.

The calibration pointer device can be configured to allow an easy determination of its position during the calibration. For a more precise and accurate measurement, it can for example be longer than the measurement pointer device which it replaces and which is used once the gauge is calibrated. It can in particular extend beyond the measurement dial that is used during the normal operation of the gauge. If the dial is enclosed by a housing, the calibration pointer device can have spacing elements that shift the calibration pointer device away from the housing.

Preferably, the adjusting is performed by a machine, in particular in an automated process. Thereby, the process is less time and cost intensive.

At least one of the steps: determining the positions of the calibration pointer device, calculating at least one correction value and adjusting the gauge can be automated. In a preferred embodiment, the entire process is performed by at least one machine in an automated manner without interaction from a human operator.

In order to take into account a hysteresis effect, the position can be determined twice at the same value of the physical quantity, wherein one of the two determinations is performed directly after the determination at a lower value and the other of the two determinations is performed directly after a determination at a higher value. For example, the sequence of measurements can be 0 %, 50 %, 100 % and then 50 % again. In this case, the measurement at 50 % is performed twice, the first time coming from 0 %, and the second time coming from 100 %. The correction value for the 50 % can then be calculated to be between the correction value based on the value from the first and the value from the second time.

As an alternative, the position could be determined twice at the same value of the physical quantity, wherein one of the two determinations is performed with the physical quantity coming from a lower value and the other of the two determinations is performed with the physical quantity coming from a higher value without measurements at the lower and/or higher values. For example, the position could be determined twice at 50 %, wherein once the physical quantity is coming from a value below 50 % and in the other case the physical quantity is coming from a value that is higher than 50 %.

The positions of the calibration pointer device can be measured at at least two different calibration values of the physical quantity. In a preferred embodiment, the positions are measured at three or more different calibration values in order to allow for a compensation of non-linear errors.

In a preferred embodiment of the method, the determination of the position of the calibration pointer device at a first calibration value is made by determining the position of a first pointer element of the calibration pointer device and the determination of the position of the calibration pointer device at a second calibration value is made by determining the position of a second pointer element of the calibration pointer device that is fixed to the first pointer element and displaced relative to the first pointer element along the direction of movement of the calibration pointer device. As the calibration pointer device moves during the method when different calibration values are reached, it can be easier to measure the positions of different parts of the calibration pointer device using one sensor than measuring the position of a single calibration pointer device with multiple sensors. The position of the calibration pointer device can then be calculated as the positions of the first pointer element and the second pointer element relative to the other pointer element and/or the rest of the calibration pointer device are known.

The first and the second pointer element can be assigned to a particular calibration value. Accordingly, the first pointer element and the second pointer element are then located at approximately the same position relative to a fixed point at the first and the second calibration value, respectively. This has the advantage that the position of the calibration pointer device can be measured with a single electric sensor that is located at the fixed position where the first and the second pointer element will be located when the respective calibration values are applied.

The method of calibrating according to the invention also enables an improved method of producing an adjustable mechanical gauge. In such an improved method of producing an adjustable mechanical gauge, the method of calibrating is applied and the calibrating is performed before a dial and/or a measurement pointer device is attached. In particular, the method can comprise only one calibration step and this one calibration step can be performed before the dial and/or the measurement pointer device is attached. In contrast to the method according to the prior art, at least one correction value can be calculated and the gauge can be adjusted accordingly before the dial and/or the measurement pointer device is attached. Therefore, the improved method of producing an adjustable mechanical gauge is more time and cost efficient as the previous method.

The method of calibrating according to the invention further enables to use the calculated calibration values as a basis for printing individual dials, whereby the individual dials compensate any non-linearity of the gauge. By this the calibration is not necessary anymore.

The inventive solution can be performed with an improved calibration device for calibrating an adjustable mechanical pointer gauge for a physical quantity, for example a pressure gauge, at a plurality of different calibration values of the physical quantity.

Such an improved calibration device comprises a calibration pointer device that is configured to replace a measurement pointer device, the calibration pointer device having a plurality of pointer elements which are assigned each to a different one of the calibration values, the calibration device further comprising at least one electrical sensor configured to be mounted to the mechanical gauge at a fixed position and to determine the position of each pointer element at its assigned value.

The calibration pointer device, like the measurement pointer device, can be pin-shaped. As an alternative, the calibration pointer device or the measurement pointer device can have other shapes. For example, they can be disc-like and the position of the calibration pointer device can be measured by measuring a point on the disc, for example a pattern, a mark or an arrow.

The calibration pointer device and/or the measurement pointer device can be rotating pointer devices that rotate around an axis. The pointer elements, for example the first and the second pointer elements of such a pointer device can be offset relative to each other at an angle around the axis.

One of the pointer elements, for example the first pointer element, can correspond to the real value of the physical quantity to be measured and one or more of the other pointer elements can correspond to the real value plus/minus a fixed value. For example, the first pointer element can correspond to the real value and show 0 % when 0 % of the physical quantity is applied. A second and a third pointer element can be offset by 50 % of the maximum calibration value relative to the first and the second pointer element, respectively. Therefore, when 50 % of the calibration value is applied, the second pointer element can point to the 0 %-mark on the dial and the third pointer element can point at the 0 %-mark when 100 % of the maximum calibration value is applied.

In another advantageous embodiment, more than two pointer elements are present and used for calibration gauges with different spans. For example, five pointer elements can be used, where the first pointer element is assigned to 0 % of a first and to 0 % of a second span. The fifth pointer element can correspond to 100 % of the first span. For the first span, the first and the fifth pointer element therefore correspond to the end points of the span. The third pointer element can be assigned to 50 % of the first span and serve to improve the linearity of the first span. The third pointer element can also be assigned to 100 % of the second span and be used to calibrate a gauge having the second span. In this case, the second pointer element can be used to calibrate for linearity. The second pointer element could also be used for a more precise calibration of the first span. It could e.g. be assigned to 25 % of the first span.

In a preferred embodiment, the calibration device comprises only one electrical sensor and the position of each pointer element at its assigned calibration value is determined with this one electrical sensor. In particular, the pointer elements can each be in approximately the same position when its assigned calibration value is applied. For example, the pointer elements can be located in front of the electrical sensor when the respective assigned calibration value is applied and be located away from the electrical sensor when a different calibration pressure is applied.

The electrical sensor can be based on different measurement principles. The calibration pointer device can be adapted for a measurement with the electrical sensor. For example, the electric sensor can be based on an optical measurement method and the calibration pointer device can be optimized for an optical measurement. It can for example be reflective or it can be coated. Its shape can be optimized for a certain measurement method.

In an advantageous embodiment, the electrical sensor comprises a sensor element, the sensor element having a linear field of measurement. Such a linear field of measurement can be sufficient for determining the position with a high degree of precision.

If the electrical sensor has a sensor element that has a linear field of measurement, the linear field of measurement can be parallel to a direction of movement of the pointer elements at the fixed position. This allows to determine the position with a high degree of precision, in particular if the pointer elements are pin-shaped.

In order to calculate at least one correction value by which the gauge should be corrected, the calibration device can further comprise a processor or analyzer that is adapted to receive position information representative of the position of the pointer at its assigned calibration value and that is adapted to compute a correction value to be applied to the mechanical pointer gauge. The processor can be detachable. It can for example be located in a computer that can be separated from other parts of the calibration device.

The calibration device can further comprise an adjustment part that can apply adjustment operations to the gauge. In particular, such an adjustment operation can be automated. It can be adapted to automatically apply the at least one calculated correction value to the gauge.

In an advantageous embodiment, the calibration pointer device is balanced. This balancing can be realized by mechanical means or by mathematical calculations. If the calibration pointer device rotates around a horizontal axis, the calibration pointer device can be designed such that the force on one side of the axis equals the force on the other side of the axis for every angle. To achieve this, for example one of the pointer elements can have an additional weight on it. This additional weight can for example be integral with the pointer element.

The invention will be described hereinafter in greater detail and in an exemplary manner using advantageous embodiments and with reference to the drawings. The described embodiments are only possible configurations in which, however, the individual features as described above can be provided independently of one another or can be omitted.

In the drawing:
- Fig. 1: shows a schematic perspective view of a calibration device according to the invention;
- Figs. 2A-C: schematically shows a preferred embodiment of a method according to the invention;
- Fig. 3: shows a schematic view of a pointer element and an electric sensor according to the invention;
- Fig. 4: shows a preferred embodiment of a calibration pointer device according to the invention;
- Fig. 5: shows a schematic view of a preferred system according to the invention.

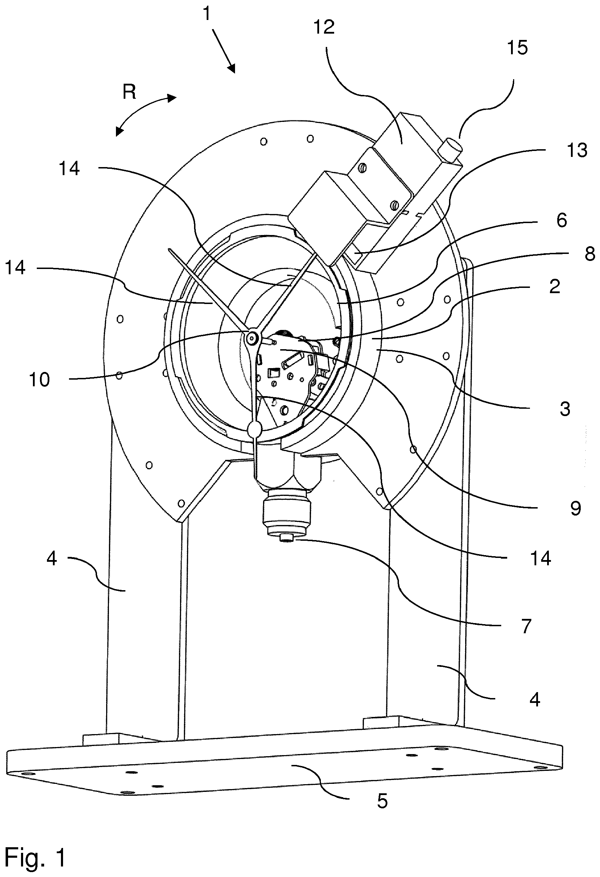

Fig. 1 shows a calibration device 1 according to the invention, to which an adjustable mechanical pointer gauge 2 is attached. The calibration device 1 comprises a frame 3 that allows to attach the gauge 2 in only one single position. The frame 3 is fixed to two stands 4 which in turn are fixed to a base plate 5.

The gauge 2 is a pressure gauge adapted to measure different pressures. The gauge 2 comprises the housing 6 and a pressure inlet 7 to which for example a tube can be connected and pressure can be applied. The pressure inlet 7 directs the gas to a measuring element 8 that exhibits different amplitudes of deformation for different pressures. This measuring element is C-shaped, wherein one end of the C is fixed to the pressure inlet 7. The other end is moveable and connected to an adjustable transmission mechanism 9 that transmits the deformation to a shaft 10 to which a measurement pointer device can be attached. However, in Fig. 1, a calibration pointer device 11 is attached to the shaft 10. When different pressures are applied, the calibration pointer device 11 rotates in a rotation direction R.

The position of the calibration pointer device 11 can be determined for different calibration pressures by measuring the position with an electric sensor 12. The electric sensor 12 is a line sensor that is mounted to the frame 3 and thus indirectly mounted at a fixed position relative to the gauge 2.

The calibration pointer device 11 comprises three pointer elements, each of which is assigned to a specific calibration value, for example to 0%, 50% and 100% of the maximum pressure allowed for the gauge 2. If for example the maximum pressure for the gauge 2 is 10 bar, the three pointer elements could relate to 0 bar, 5 bar and 10 bar.

The electric sensor 12 is a line sensor which comprises a sensor element 13, wherein the sensor element 13 has a linear field of measurement. This linear field of measurement is parallel to a direction of movement of the pointer elements 14 at the fixed position. With the electric sensor 12, the position of each pointer element 14 can be determined precisely in front of the sensor element 13 when the calibration pressure that is assigned to the respective pointer element 14 is applied.

As the measuring elements 8 of different gauges 2 are slightly different the gauges 2 have to be calibrated. In this case, the calibration is done by adjusting the adjustable transmission mechanism 9. In order to find out, by which value the adjustable transmission mechanism 9 has to be corrected, the position of the calibration pointer device 11 is measured at at least two different calibration pressures. In this case, the position of the calibration pointer device 11 is determined by determining the position of the pointer elements 14 in front of the sensor element 13 of the electric sensor 12. Information representative of the measured positions can then be output through the output 15 of the electric sensor 12. They could then for example be displayed on a screen. Preferably, these measured positions are further processed by a processor 16 which then automatically determines one or more correction values by which the gauge, in particular the adjustable transmission mechanism 9 of the gauge 2 should be corrected so that the gauge 2 will show the correct values.

Once one or more correction values have been calculated, the gauge 2 can be adjusted. This can be done manually, for example by tightening or loosening an adjustment screw of the adjustable transmission mechanism 9. Preferably, the adjusting is performed by a machine in an automated manner without interaction from a human operator. After adjusting, a dial can be fixed to the housing 6. In a preferred method of producing a gauge 2, the only manual operation step after fixing the dial on the housing is to correct the offset position of the measurement pointer.

In Fig. 1 the gauge 2 does not comprise a dial or a measurement pointer device. Rather, the dial and the measurement pointer device are attached to the rest of the gauge 2 after the gauge 2 has been calibrated. In contrast to the previous method, in which the gauge 2 is calibrated manually by a human operator, it is not necessary to have a dial attached to the gauge 2 for calibration. Rather, because the electric sensor 12 is mounted to the gauge 2 at a fixed position and the position of the calibration pointer device 11 is determined with the electric sensor 12, the use of a dial and human judgment are unnecessary.

Further, the positions of the calibration pointer device 11 can be measured for different calibration pressures in one go without intermediate adjustment steps. The optimal correction values can be calculated based on the plurality of measured positions, and the adjustable transmission mechanism 9 can than be corrected with this one or more correction values. The calculation based on the entirety of positions allows a much better result than the previous method in which the adjustment was mainly based on a single measurement and on experience of the human operator.

The pointer elements 14 can be optimized for the electric sensor 12. In the present case, the electric sensor 12 is an optical sensor. Therefore, the pointer elements 14 can be reflective. They can have sharp edges that allow a precise determination of the position.

In this embodiment, the pointer elements 14 are longer than measurement pointer devices that are used when the calibration of the gauge 2 is finished. The pointer elements 14 project outward from the shaft 10 over the housing 6 in order to be readable by the sensor element 13. As they are longer, a more precise measurement of the angle position is possible. In an alternative embodiment, the electric sensor 12 could be positioned in another place. For example, the electric sensor 12 could be located in front of the housing 6 so that the sensor element 13 faces the gauge 2, in particular in an area where the dial will be. In this case, the use of longer pointer elements would be unnecessary. Rather, it would even be possible to use the measurement pointer device as a calibration pointer device.

In the embodiment of Fig. 1, a position of the calibration pointer device 11 is determined with a single electric sensor 12 by determining the position of a pointer element 14 in front of the sensor element 13 when the calibration pressure assigned to the pointer element 14 is applied.

The calibration pointer device 11 is shown to comprise three pointer elements 14 that are basically pin-like or stick-like and project from the shaft 11 radially outwards. As an alternative, the calibration pointer device 11 could also be in the shape of a disc and the pointer elements 14 could for example be markings on the disc.

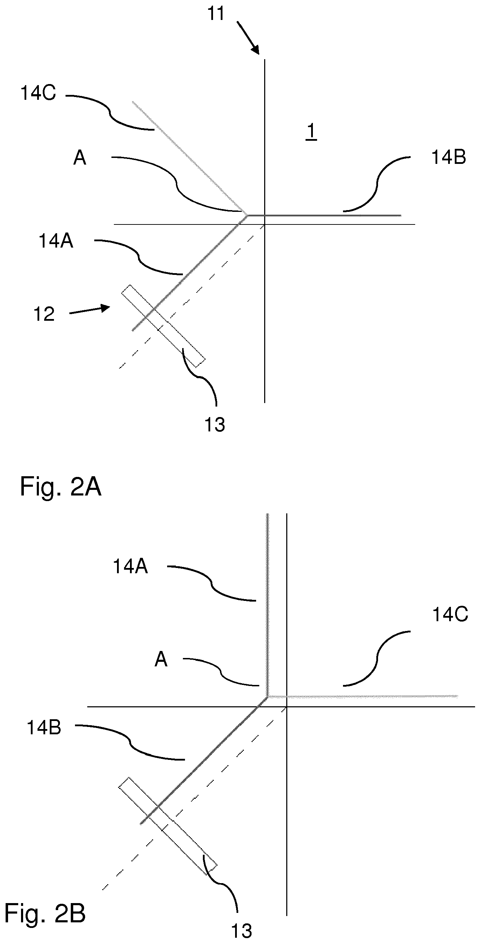

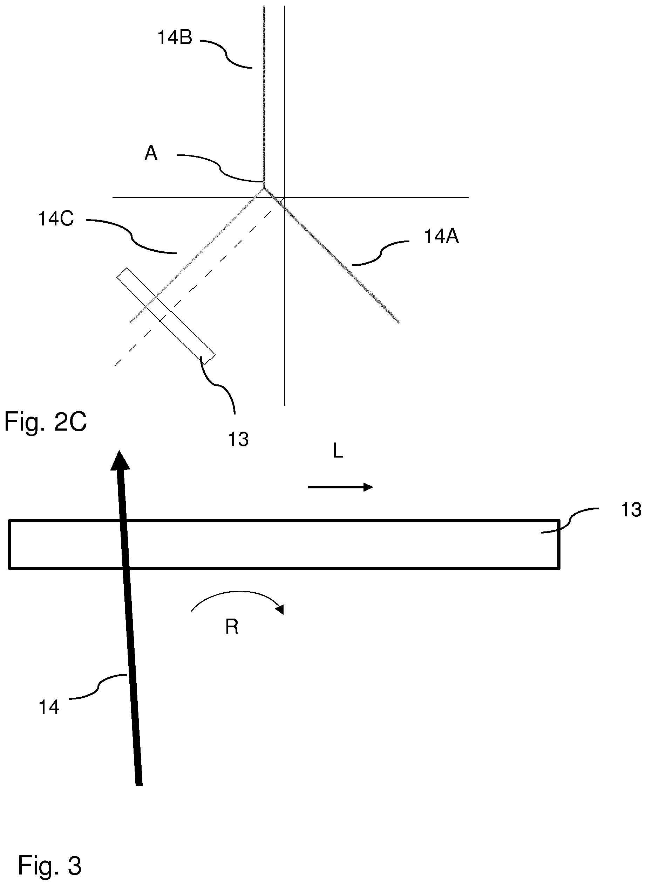

In Figs. 2A to 2C, the method of calibrating according to the invention is shown schematically. In Fig. 2A, a first calibration pressure is applied and a first pointer element 14A of the calibration pointer device 11 is in front of the sensor element 13 of the electric sensor 12. The calibration pointer device 11 further comprises a second pointer element 14B that is fixed to the first pointer element 14A and offset by 135° around the axis of rotation A of the calibration pointer device 11. Furthermore, a third pointer element 14C is attached to the first and the second pointer element 14A, 14B. The third pointer element 14C is offset by 135° relative to the second pointer element 14B and thus offset by 270° to the first pointer element 14A. Accordingly, this calibration pointer device 11 can be used for a gauge 2 that has a span of 270°. The first pointer element 14A can be used for the lowest pressure of 0 bar and the third pointer element 14C can be used for the maximum pressure. The second pointer element 14C serves to calibrate the gauge 2 for linearity at a value of 50% of the maximum pressure. In alternative embodiments two or more pointer elements can be located between the first and the third pointer element 14A, 14C in order to achieve better results Further, different spans could be calibrated with pointer elements lying between the first and the third pointer element 14A, 14C. For example, five pointer elements 14 could each be spaced by 50° to the neighbouring pointer element. A span of 100° could be calibrated with the first and the third pointer element for the minimum and maximum pressure, respectively, and the second pointer element at 50% of the maximum pressure. A span of 200° could be calibrated with the first and the fifth pointer element for the minimum and maximum pressure and the third pointer element
for 50 % of the maximum pressure. The second and the fourth pointer element could serve for additional measurements at 25 and 75 %, respectively.

Figs. 2A to 2C show three steps of the calibration, where a first, a second and a third pressure are respectively applied. As a consequence, the first, second and third pointer element 14A, 14B, 14C are respectively located in front of the sensor element 13 and can be measured.

Although the axis of rotation A of the calibration pointer device 11 and the center C of the calibration device 1 are not aligned, this misalignment does not influence the measurement at the different pressures, because the three pointer elements 14A, 14B, 14C are fixed relative to each other at the axis of rotation A. Thus, the offset between the axis of rotation A and the center C is the same for all three pressure levels and is thus automatically compensated.

The method shown in Figs. 2A to 2C comprises three measurements at three different pressures starting with the lowest pressure, going to a medium pressure and ending with the highest pressure. After the measurement at the highest pressure, the measurement at the medium pressure can be repeated in order to determine how big the hysteresis is. Such a method would then include one measurement at a medium pressure after a lower pressure has been measured, and one measurement after a measurement at a higher pressure. Of course, the series of measurements does not have to start at 0 bar or at the lowest pressure, but could also start at higher values and then go down to lower values.

In Fig. 3 the configuration of a pointer element 14 and a sensor element 13, in particular a sensor element 13 that has a linear field of measurement, is shown. The pointer element 14 rotates in the direction R. The sensor element 13 extends in a longitudinal direction L. At the center of the sensor element 13, the longitudinal direction L is parallel to the rotation direction R which allows a precise measurement of the position of the pointer element 14.

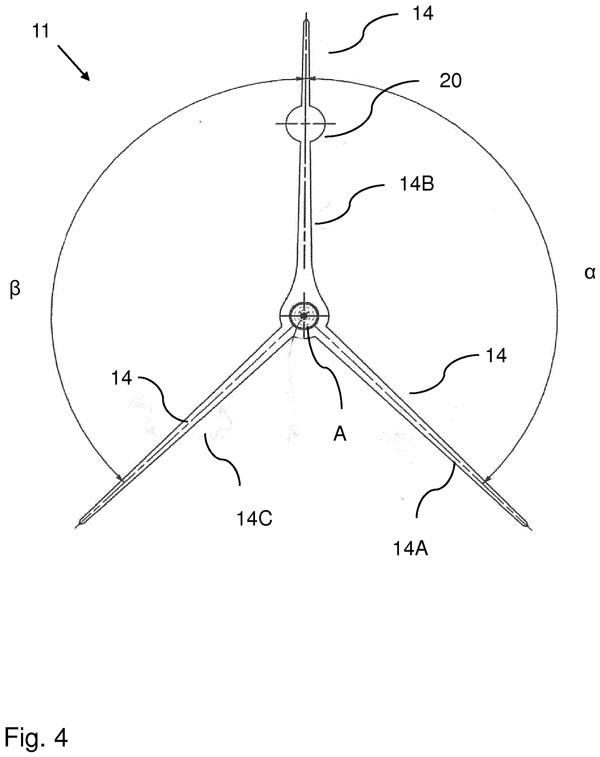

In Fig. 4 a preferred embodiment of a calibration pointer device 11 is shown. The pointer elements 14 of the calibration pointer device 11 are pin-like and project radially outwards from the axis of rotation A. The pointer elements 14 are longer than corresponding pointer elements of a measurement pointer device so that they can be measured by an electric sensor 12 located outside the gauge 2.

A first angle α between the first pointer element 14A and the second pointer element 14B is equal to an angle β between the second pointer element 14B and the third pointer element 14C. Each of the two angles α, β is 135°, resulting in an angle of 270° between the first pointer element 14A and the third pointer element 14C. This angle corresponds to the angle between zero pressure and maximum pressure on a dial of a gauge 2 that is to be calibrated. As a result of the uneven distribution of the pointer elements 14, the calibration pointer device 11 would produce a momentum when it is rotated around the axis of rotation A. In order to compensate this, the second pointer element 14B carries an additional weight 20, which is formed integral with the second pointer element 14B. Hence, when the calibration pointer device 11 is for example rotated 90° relative to the position shown in Fig.4, the left side and the right side exert the same force on the axis A.

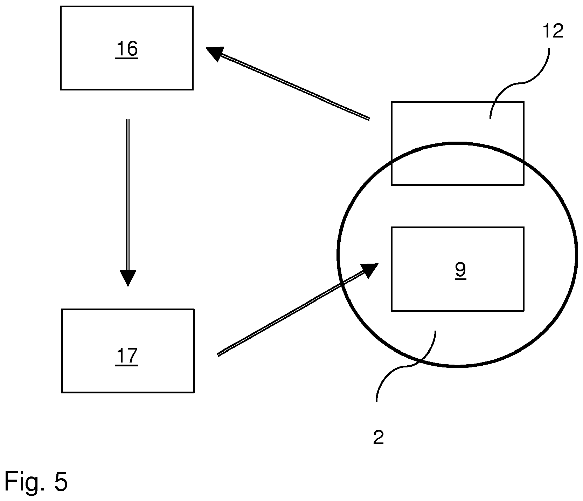

In Fig. 5 a preferred system according to the invention is depicted. An electric sensor 12 measures on a gauge 2. The information from the measurement is transmitted from the sensor 12 to a processor 16, and then processed in the processor 16, which calculates one or more correction values. This correction information is sent to an adjustment part 17 that operates on the gauge 2, for example on an adjustable transmission mechanism 9 of the gauge 2. At least one of the preceding steps, preferably all of them are performed in an automated manner without interaction from a human operator, making the method more time and cost efficient than previous methods.

## Claims

1. Method of calibrating an adjustable mechanical pointer gauge (2) for measuring a physical quantity, for example a pressure gauge, **characterized in that**, the method comprises determining the positions of at least two pointer elements (14A, 14B) of an calibration pointer device (11) at at least two different calibration values of the physical quantity, wherein the positions of each pointer element (14A, 14B) are determined using a single electric sensor (12), wherein at a first calibration value the determination of the position of the calibration pointer device (11) is made by determining the position of the first pointer element (14A) and at a second calibration value the determination of the position of the calibration pointer device (11) is made by determining the position of the second pointer element (14B) that is fixed to the first pointer element (14A) and displaced relative to the first pointer element (14A) along the direction of movement of the calibration pointer device (11) and, if necessary, adjusting the mechanical pointer gauge (2) based on the determined positions of the at least two pointer elements (14A, 14B), wherein the calibration pointer device (11) is configured to replace a measurement pointer device.

2. Method according to claim 1, **wherein** the first pointer element (14A) and the second pointer element (14B) are located at approximately the same position at the first and the second calibration value, respectively.

3. Method according to one of claims 1 to 2, **wherein** the adjustable mechanical pointer gauge (2) comprises a measuring element (8) that exhibits different amplitudes of deformation for different values of the physical quantity and an adjustable transmission mechanism (9) for transmitting the deformation to the calibration pointer device (11), and wherein the gauge (2) is adjusted by adjusting the adjustable transmission mechanism (9).

4. Method according to one of claims 1 to 3, **wherein** the method comprises the automated calculation of at least one correction value by which the gauge (2) should be corrected.

5. Method according to one of claims 1 to 4, **wherein** that single electrical sensor (12) comprises a sensor element (13), wherein the sensor element (13) has a linear field of measurement.

6. Method according to one of claims 1 to 5, **wherein** the positions are determined with a calibration pointer device (11) that is longer than a measurement pointer device.

7. Method according to one of claims 1 to 6, **wherein** the position is determined twice at the same value of the physical quantity, wherein one of the two determinations is performed directly after a determination at a lower value and the other of the two determinations is performed directly after a determination at a higher value.

8. Method of producing an adjustable mechanical pointer gauge (2), **wherein** the method comprises a method of calibrating according to one of claims 1 to 7, and wherein the calibrating is performed before a dial and/or a measurement pointer device is attached.

9. Calibration device (1) for calibrating an adjustable mechanical pointer gauge (2) for measuring a physical quantity, for example a pressure gauge, at a plurality of different calibration values of the physical quantity, **characterized in that**, the calibration device (1) comprises a calibration pointer device (11) with at least two pointer elements (14A, 14B), which are fixed to each other and displaced relative to each other along the direction of movement of the calibration pointer device (11) and a single electrical sensor (12) configured to be mounted to the mechanical gauge (2) at a fixed position and adapted to determine the position of each pointer element (14A, 14B) at its assigned value of the physical quantity, wherein the calibration pointer device (11) is configured to replace a measurement pointer device.

10. Calibration device (1) according to claim 9, **wherein** that single electrical sensor (12) comprises a sensor element (13), the sensor element (13) is having a linear field of measurement.

11. Calibration device (1) according to one of claims 9 to 10, **wherein** in an operating position the linear field of measurement extends parallel to a direction of movement (R) of the pointer elements (14) at the fixed position.

12. Calibration device (1) according to one of claims 9 to 11, **wherein** the calibration device (1) comprises a processor (16) adapted to receive position information representative of the position of a pointer element (14) at its assigned calibration value and adapted to compute a correction value to be applied to the mechanical pointer gauge (2).

13. Calibration device (2) according to one of claims 9 to 12, wherein the calibration device (1) is balanced.

## Patentansprüche

1. Verfahren zur Kalibrierung eines einstellbaren mechanischen Zeigerinstruments (2) zum Messen einer physikalischen Größe, beispielsweise eines Manometers, **dadurch gekennzeichnet dass** das Verfahren die Bestimmung der Positionen von mindestens zwei Zeigerelementen (14A, 14B) einer Kalibrierzeigereinrichtung (11) für mindestens zwei verschiedene Kalibrierungswerte der physikalischen Größe umfasst, wobei die Positionen jedes Zeigerelements (14A, 14B) durch einen einzigen elektrischen Sensor (12) bestimmt werden, indem bei einem ersten Kalibrierungswert die Bestimmung der Position der Kalibrierzeigereinrichtung (11) durch Bestimmen der Position des ersten Zeigerelements (14A) der Kalibrierzeigereinrichtung (11) erfolgt und bei einem zweiten Kalibrierungswert die Bestimmung der Position der Kalibrierzeigereinrichtung (11) durch Bestimmen der Position des zweiten Zeigerelements (14B) der Kalibrierzeigereinrichtung (11) erfolgt, das am ersten Zeiger befestigt und relativ zum ersten Zeigerelement (14A) entlang der Bewegungsrichtung der Kalibrierzeigereinrichtung (11) versetzt ist, und das bei Bedarf eine Einstellung des Zeigerinstruments (2) basierend auf den bestimmten Positionen der mindestens zwei Zeigerelemente (14A, 14B) umfasst, wobei die Kalibrierzeigereinrichtung (11) ausgestaltet ist, eine Messzeigereinrichtung zu ersetzen.

2. Verfahren nach Anspruch 1, wobei das erste Zeigerelement (14A) und das zweite Zeigerelement (14B) jeweils etwa an der gleichen Position zum ersten und zum zweiten Kalibrierungswert angeordnet sind.

3. Verfahren nach einem der Ansprüche 1 oder 2, wobei das einstellbare mechanische Zeigerinstrument (2) ein Messelement (8) aufweist, das unterschiedliche Amplituden der Verformung für verschiedene Werte der physikalischen Größe aufweist und einen verstellbaren Getriebemechanismus (9) zur Übertragung der Verformung der Kalibrierzeigereinrichtung (11) aufweist, und wobei das Zeigerinstrument (2) durch Einstellen des einstellbaren Getriebemechanismus (9) justiert wird.

4. Verfahren nach einem der Ansprüche 1 bis 3, bei dem das Verfahren die automatische Berechnung von mindestens einem Korrekturwert umfasst, durch den das Zeigerinstrument (2) korrigiert werden soll.

5. Verfahren nach einem der Ansprüche 1 bis 4, wobei der einzige elektrische Sensor (12) ein Sensorelement (13) aufweist, wobei das Sensorelement (13) einen linearen Bereich der Messung aufweist.

6. Verfahren nach einem der Ansprüche 1 bis 5, wobei die Positionen mit einer Kalibrierzeigereinrichtung (11) bestimmt werden, die länger als eine Messzeigereinrichtung ist.

7. Verfahren nach einem der Ansprüche 1 bis 6, wobei die Position zweimal beim gleichen Wert der physikalischen Grösse bestimmt wird, indem eine der zwei Bestimmungen unmittelbar nach einer Bestimmung bei einem niedrigeren Wert durchgeführt wird und die andere der zwei Bestimmungen unmittelbar nach einer Bestimmung bei einem höheren Wert durchgeführt wird.

8. Verfahren zur Herstellung eines einstellbaren mechanischen Zeigerinstruments (2), wobei das Verfahren ein Verfahren zum Kalibrieren nach einem der Ansprüche 1 bis 7 umfasst, und wobei die Kalibrierung vor einer Skalenscheibe durchgeführt wird und / oder eine Messzeigereinrichtung befestigt ist.

9. Kalibriervorrichtung (1) zur Kalibrierung eines einstellbaren mechanischen Zeigerinstruments (2) zum Messen einer physikalischen Grösse, beispielsweise eines Manometers, bei einer Vielzahl von unterschiedlichen Kalibrierungswerten der physikalischen Grösse, **dadurch gekennzeichnet dass** die Kalibriervorrichtung (1) eine Kalibrierzeigereinrichtung (11) mit mindestens zwei Zeigerelementen (14A, 14B) umfasst, welche aneinander befestigt sind und relativ zu einander entlang der Bewegungsrichtung der Kalibrierzeigereinrichtung (11) bewegt werden, und einen einzigen elektrischen Sensor (12) umfasst, ausgestaltet um am Zeigerinstrument (2) an einer festen Position montiert zu werden und geeignet die Position jedes Zeigerelements (14A, 14B) am ihm zugewiesenen Wert der physikalischen Grösse zu bestimmen, wobei die Kalibrierzeigereinrichtung (11) ausgestaltet ist eine Messzeigereinrichtung zu ersetzen.

10. Kalibriervorrichtung (1) nach Anspruch 9, wobei der einzige elektrische Sensor (12) ein Sensorelement (13) umfasst und das Sensorelement (13) ein lineares Messfeld aufweist.

11. Kalibriervorrichtung (1) nach einem der Ansprüche 9 bis 10, wobei in einer Betriebsstellung der lineare Bereich der Messung sich parallel zu einer Bewegungsrichtung (R) der Zeigerelemente (14) an der festen Position erstreckt.

12. Kalibriervorrichtung (1) nach einem der Ansprüche 9 bis 11, wobei die Kalibriervorrichtung (1) einen Prozessor (16) umfasst, ausgestaltet um Positionsinformation bezüglich der Position eines Zeigerelements (14) an seinem zugeordneten Kalibrierungswert zu empfangen und einen Korrekturwert zu berechnen, der auf das mechanische Zeigerinstrument (2) angewendet wird.

13. Kalibriervorrichtung (1) nach einem der Ansprüche 9 bis 12, wobei die Kalibriervorrichtung (1) ausgeglichen ist.

## Revendications

1. Procédé permettant d'étalonner une jauge à aiguille mécanique réglable (2) destinée à mesurer une quantité physique, par exemple un manomètre, **caractérisé en ce que** le procédé consiste à déterminer les positions d'au moins deux éléments d'aiguille (14A, 14B) d'un dispositif d'aiguille d'étalonnage (11) à au moins deux valeurs d'étalonnage de la quantité physique, les positions de chaque élément d'aiguille (14A, 14B) étant déterminées à l'aide d'un unique capteur électrique (12), à une première valeur d'étalonnage la détermination de la position du dispositif d'aiguille d'étalonnage (11) étant réalisée en déterminant la position du premier élément d'aiguille (14A) et à une seconde valeur d'étalonnage la détermination de la position du dispositif d'aiguille d'étalonnage (11) étant réalisée en déterminant la position du second élément d'aiguille (14B) qui est fixé au premier élément d'aiguille (14A) et déplacé par rapport au premier élément d'aiguille (14A) le long de la direction de déplacement du dispositif d'aiguille d'étalonnage (11) et, si nécessaire, en réglant la jauge à aiguille mécanique (2) en fonction des positions déterminées des au moins deux éléments d'aiguille (14A, 14B), le dispositif d'aiguille d'étalonnage (11) étant configuré pour remplacer un dispositif d'aiguille de mesure.

2. Procédé selon la revendication 1, **dans lequel** le premier élément d'aiguille (14A) et le second élément d'aiguille (14B) sont situés approximativement dans la même position aux première et seconde valeurs d'étalonnage, respectivement.

3. Procédé selon l'une des revendications 1 à 2, **dans lequel** la jauge à aiguille mécanique réglable (2) comprend un élément de mesure (8) qui présente différentes amplitudes de déformation pour différentes valeurs de la quantité physique et un mécanisme de transmission réglable (9) permettant de transmettre la déformation au dispositif d'aiguille d'étalonnage (11), et dans lequel la jauge (2) est réglée en ajustant le mécanisme de transmission réglable (9).

4. Procédé selon l'une des revendications 1 à 3, **dans lequel** le procédé comprend le calcul automatisé d'au moins une valeur de correction selon laquelle la jauge (2) devrait être corrigée.

5. Procédé selon l'une des revendications 1 à 4, **dans lequel** l'unique capteur électrique (12) comprend un élément de détection (13), l'élément de détection (13) présentant une plage de mesure linéaire.

6. Procédé selon l'une des revendications 1 à 5, **dans lequel** les positions sont déterminées avec un dispositif d'aiguille d'étalonnage (11) qui est plus long qu'un dispositif d'aiguille de mesure.

7. Procédé selon l'une des revendications 1 à 6, **dans lequel** la position est déterminée deux fois à la même valeur de la quantité physique, une des deux déterminations étant réalisée directement après une détermination à une valeur inférieure et l'autre des deux déterminations étant réalisée directement après une détermination à une valeur supérieure.

8. Procédé de fabrication d'une jauge à aiguille mécanique réglable (2), **dans lequel** le procédé comprend un procédé d'étalonnage selon l'une des revendications 1 à 7, et dans lequel l'étalonnage est réalisé avant qu'un cadran et/ou un dispositif d'aiguille de mesure soit fixé.

9. Dispositif d'étalonnage (1) permettant d'étalonner une jauge à aiguille mécanique réglable (2) destinée à mesurer une quantité physique, par exemple un manomètre, à une pluralité de valeurs d'étalonnage différentes de la quantité physique, **caractérisé en ce que** le dispositif d'étalonnage (1) comprend un dispositif d'aiguille d'étalonnage (11) avec au moins deux éléments d'aiguille (14A, 14B) qui sont fixés et déplacés l'un par rapport à l'autre le long de la direction de déplacement du dispositif d'aiguille d'étalonnage (11) et un unique capteur électrique (12) configuré pour être fixé à la jauge mécanique (2) à une position fixe et conçu pour déterminer la position de chaque élément d'aiguille (14A, 14B) à sa valeur attribuée de la quantité physique, le dispositif d'aiguille d'étalonnage (11) étant configuré pour remplacer un dispositif d'aiguille de mesure.

10. Dispositif d'étalonnage (1) selon la revendication 9, **dans lequel** l'unique capteur électrique (12) comprend un élément de détection (13), l'élément de détection (13) présentant une plage de mesure linéaire.

11. Dispositif d'étalonnage (1) selon l'une des revendications 9 à 10, **dans lequel,** dans une position de fonctionnement, la plage de mesure linéaire s'étend parallèlement à une direction de déplacement (R) des éléments d'aiguille (14) à une position fixe.

12. Dispositif d'étalonnage (1) selon l'une des revendications 9 à 11, **dans lequel** le dispositif d'étalonnage (1) comprend un processeur (16) conçu pour recevoir des informations de position représentatives de la position d'un élément d'aiguille (14) à sa valeur d'étalonnage attribuée et conçue pour calculer une valeur de correction destinée à être appliquée à la jauge à aiguille mécanique (2).

13. Dispositif d'étalonnage (1) selon l'une des revendications 9 à 12, dans lequel le dispositif d'étalonnage (1) est équilibré.
